# FASCICULE DE BREVET EUROPEEN

(11) **EP 3 077 231 B1**
(45) Date de publication et mention de la délivrance du brevet: **30.08.2017**
(21) Numéro de dépôt: 14805906.6
(22) Date de dépôt: 02.12.2014
(51) Int. Cl.: B60H 1/00, F28F 9/013, F28F 9/02

(54) **INSTALLATION POUR VÉHICULE AUTOMOBILE**
ANLAGE FÜR EIN KRAFTFAHRZEUG
INSTALLATION FOR A MOTOR VEHICLE

(30) Priorité: 05.12.2013 FR 1362153
(43) Date de publication de la demande: 12.10.2016
(73) Titulaire: Valeo Systemes Thermiques, 78320 Le Mesnil Saint Denis (FR)
(72) Inventeur: GUIGOU, Pascal, F-92260 Fontenay Aux Roses (FR); PIERRES, Philippe, F-78990 Elancourt (FR); LISKA, Jan, 25228 Cernovice (CZ); ALMORI, Armelle, F-78310 Maurepas (FR)
(74) Mandataire: Metz, Gaëlle
(86) Numéro de dépôt international: PCT/EP2014/076171
(87) Numéro de publication internationale: WO 2015/082433

(56) Documents cités:
- EP-A1- 1 609 640
- DE-A1-102010 062 326
- DE-B3-102004 051 874
- US-A1- 2007 246 187

## Description

L'invention concerne une installation pour véhicule automobile, telle qu'une installation de chauffage, ventilation et/ou climatisation pour un habitacle de véhicule automobile.

Une installation de chauffage, ventilation et/ou climatisation pour un habitacle de véhicule automobile permet le contrôle de la température de flux d'air dans une ou plusieurs zones de l'habitacle d'un véhicule automobile.

Une telle installation comprend généralement un boîtier délimité par des cloisons à travers lesquelles sont ménagées des ouvertures, dont au moins une entrée d'air et au moins une bouche de distribution d'air. Le document DE 10 2004 051 874 B3, qui est considéré comme l'art antérieur le plus proche, divulgue une telle installation. De façon connue, le boîtier loge généralement un groupe moto-ventilateur également appelé pulseur pour faire circuler le flux d'air depuis l'entrée d'air vers la bouche de distribution d'air. Le boîtier loge aussi des moyens de traitement thermique pour réchauffer et/ou refroidir le flux d'air préalablement à sa distribution à l'intérieur de l'habitacle. À titre d'exemple, les moyens de traitement thermique peuvent comprendre un ou plusieurs échangeurs thermiques tel qu'un évaporateur destiné à refroidir l'air le traversant, ou encore un radiateur, éventuellement associé à un radiateur additionnel, destiné à réchauffer l'air qui le traverse.

Un échangeur thermique, par exemple utilisé dans l'industrie automobile, comprend des éléments d'échange thermique et d'écoulement de fluide dans lesquels circulent des fluides échangeant de la chaleur entre eux. Les éléments d'échange thermique peuvent par exemple comprendre des tubes ou des plaques, des ailettes de perturbation de la circulation de gaz et/ou des perturbateurs d'écoulement de fluide.

À cet effet, le boîtier présente un logement de réception d'un échangeur thermique au sein de l'installation. En particulier, le logement peut présenter une ouverture permettant l'introduction de l'échangeur en son sein. Cette ouverture est ultérieurement fermée par un capot.

L'échangeur thermique est de plus raccordé à un circuit de fluide, par exemple caloporteur tel que de l'eau glycolée, et à l'aide de tubulures d'entrée et de sortie reliées au circuit de fluide. Les tubulures permettent l'admission du fluide dans le faisceau d'échange thermique pour un échange thermique avec le flux d'air traversant l'échangeur thermique, et permettre également l'évacuation du fluide ayant circulé dans le faisceau d'échange thermique.

Ces tubulures sont raccordées à des extrémités de raccordement de l'échangeur thermique. Les extrémités de raccordement présentent dans ce cas une forme complémentaire des tubulures.

L'échangeur thermique comprend au moins une première boîte collectrice d'entrée du fluide et une deuxième boîte collectrice de sortie du fluide, et les extrémités de raccordement sont généralement prévues aux extrémités de ces deux boîtes collectrices.

Les extrémités de raccordement de l'échangeur thermique peuvent s'étendre selon des directions parallèles. Cette direction peut être sensiblement parallèle à une direction longitudinale des boîtes collectrices. En variante, au moins une des extrémités de raccordement peut être sensiblement coudée par rapport à la boîte collectrice associée.

Selon une solution connue, le raccordement se fait de manière coaxiale selon un axe commun entre chaque tubulure et extrémité de raccordement associée.

La liaison entre les tubulures et les extrémités de raccordement de l'échangeur thermique nécessite généralement l'ajout d'un dispositif de raccordement permettant en plus de l'assemblage d'assurer l'étanchéité.

On connaît déjà, un dispositif de raccordement réalisé sous la forme d'un collier ouvert, généralement sensiblement en forme de « C », et qui est assemblé selon un mouvement radial, de façon sensiblement perpendiculaire à l'axe commun des tubulures et extrémités de raccordement associées.

Le choix du matériau du collier est essentiel pour assurer une bonne liaison mécanique.

Selon une solution connue de l'art antérieur, il s'agit d'un collier métallique, généralement en acier à ressort. Le choix de ce matériau est justifié par le besoin d'une souplesse suffisante pour permettre au collier de s'écarter au passage au-dessus des tubulures et extrémités de raccordement et d'être en même temps suffisamment rigide pour garantir le maintien et empêcher une extraction trop facile du collier, après sa mise en place. Il est donc nécessaire de garantir l'empêchement d'un désassemblage du collier sous un effort très important.

Ces solutions connues de collier métallique ont notamment pour inconvénient d'utiliser un matériau coûteux qui, est moins compétitif par rapport à une solution qui utiliserait une matière plastique.

Selon une variante, il est connu de venir sertir les tubulures sur les extrémités de raccordement de l'échangeur thermique. Cependant, une telle opération nécessite un outillage adapté. Elle est donc coûteuse à effectuer.

L'invention a pour objectif de proposer une installation avec un échangeur thermique qui permet un assemblage simplifié réduisant ainsi l'effort de montage, tout en garantissant l'étanchéité au niveau du raccordement entre l'échangeur thermique et les tubulures reliées au circuit de fluide, permettant de garantir les performances de l'échangeur.

À cet effet, l'invention a pour objet une installation pour véhicule automobile comprenant :
- un échangeur thermique,
- un boîtier de réception de l'échangeur thermique, présentant au moins une ouverture pour l'insertion de l'échangeur thermique,
- un capot agencé en regard de l'ouverture du boîtier,
- au moins deux tubulures d'entrée et de sortie d'un fluide destinées à être raccordées à un circuit du fluide, et
- un dispositif de raccordement des tubulures d'entrée et de sortie du fluide à l'échangeur thermique,
caractérisée en ce que le dispositif de raccordement est réalisé d'une part par le capot et d'autre part par le boîtier.

Ainsi, il n'est plus nécessaire de prévoir une pièce de raccordement supplémentaire ou un outillage spécifique. La fonction de raccordement étanche est directement intégrée d'une part sur le capot et d'autre part sur le boîtier recevant l'échangeur thermique.

Le capot peut notamment avoir pour fonction la fermeture de l'ouverture du boîtier. Le capot peut en variante ou en complément avoir une fonction de protection des tubulures d'entrée et de sortie du fluide, ou encore faire office de conduit de diffusion d'air.

Selon un mode de réalisation de l'invention, le dispositif de raccordement comprend au moins une première demi-bride et au moins une deuxième demi-bride de forme complémentaire à la forme de la première demi-bride.

Selon un exemple de réalisation, la première demi-bride est réalisée d'une seule pièce avec le capot.

Selon un exemple de réalisation, la deuxième demi-bride est réalisée d'une seule pièce avec le boîtier.

Selon un aspect de l'invention, le boîtier comporte au moins une butée agencée en regard d'une deuxième demi-bride de sorte que la première demi-bride soit intercalée entre une deuxième demi-bride et une butée. Ainsi, le capot est bridé à la fois par la deuxième demi-bride et la butée associées à la première demi-bride du capot.

La butée est avantageusement réalisée d'une seule pièce avec le boîtier.

Selon un mode de réalisation, la butée présente une forme de bride sensiblement en « U ».

Ladite installation peut en outre comporter une ou plusieurs caractéristiques suivantes, prises séparément ou en combinaison :
- l'échangeur thermique comprend au moins une boîte collectrice du fluide présentant une extrémité de raccordement configurée pour être raccordée à une tubulure associée,
- au moins une tubulure présente un rebord annulaire et une extrémité de raccordement associée présente une collerette dans laquelle vient s'engager, au moins en partie, le rebord annulaire de la tubulure associée,
- l'extrémité de raccordement est sensiblement coudée par rapport à la boîte collectrice,
- l'échangeur thermique comprend deux boîtes collectrices du fluide présentant respectivement une extrémité de raccordement sensiblement coudée par rapport à la boîte collectrice associée,
- le capot présente une forme sensiblement longitudinale et comporte une charnière s'étendant sensiblement dans le sens de la largeur du capot. Cette charnière permet de compenser d'éventuelles dispersions géométriques de l'échangeur thermique.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue d'une installation de chauffage, de ventilation et/ou de climatisation comprenant un boîtier logeant un échangeur thermique destiné à être raccordé à un circuit de fluide via des tubulures,
- les figures 2a et 2b sont des vues de dessus représentant partiellement le boîtier et un capot agencé en regard du logement recevant l'échangeur thermique,
- la figure 2c est une vue agrandie montrant la fixation du capot sur le boîtier,
- la figure 3 est une vue de côté partielle montrant plus en détail le raccordement entre une tubulure raccordée au circuit de fluide et l'échangeur thermique,
- la figure 4 est une vue de côté représentant de façon partielle une extrémité de raccordement de l'échangeur thermique et une tubulure associée avant raccordement,
- la figure 5 est une vue partielle d'une tubulure,
- la figure 6 est une de côté représentant de façon partielle le capot avant assemblage avec une extrémité de raccordement et une tubulure associée, et
- la figure 7 est une de côté représentant de façon partielle le capot coiffant une extrémité de raccordement et une tubulure associée après raccordement.

Sur ces figures, les éléments identiques portent les mêmes références.

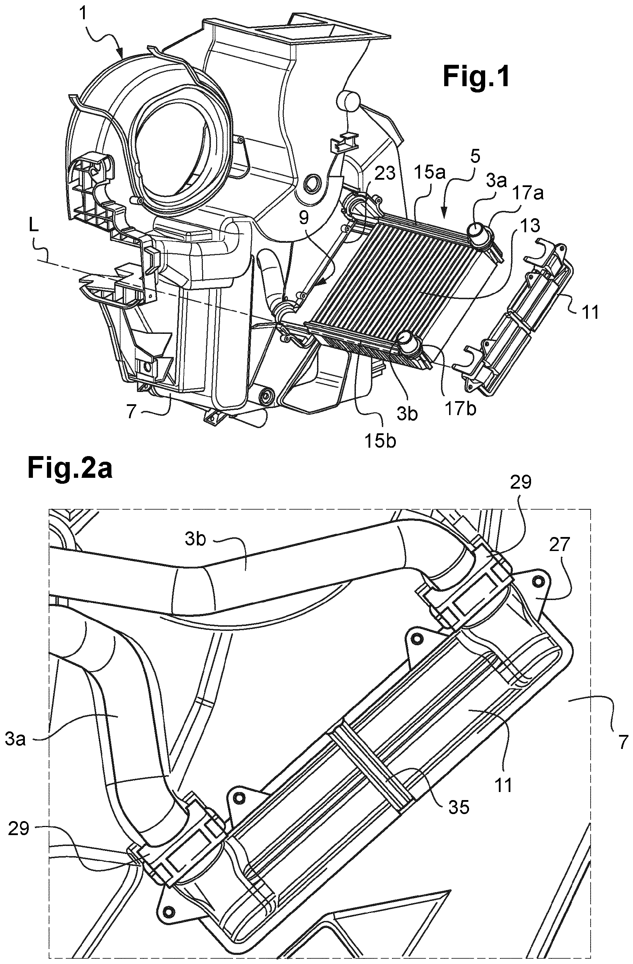

L'invention concerne une installation 1 pour véhicule automobile représentée sur la figure 1 et plus précisément le raccordement de tubulures 3a, 3b partiellement représentées sur la figure 1, reliées à un circuit de fluide, pour l'admission ou l'évacuation du fluide dans un échangeur thermique 5 de l'installation pour véhicule automobile, de façon à permettre un échange thermique entre le fluide et un deuxième fluide tel qu'un flux d'air.

Il peut s'agir notamment d'une installation 1 de chauffage, de ventilation et/ou de climatisation destinée à équiper un véhicule automobile pour réguler les paramètres aérothermiques du flux d'air distribué dans une ou plusieurs zones de l'habitacle du véhicule et vers au moins une vitre du véhicule telle que le pare-brise notamment pour un dégivrage.

À cet effet l'installation 1 peut comporter un groupe moto-ventilateur (non représenté) également appelé pulseur pour faire circuler le flux d'air depuis l'entrée d'air vers une ou plusieurs bouches de distribution d'air dans l'habitacle, et un ou plusieurs échangeurs thermiques 5 tel qu'un évaporateur destiné à refroidir l'air le traversant, ou encore un radiateur, éventuellement associé à un radiateur additionnel, destiné à réchauffer l'air qui le traverse.

L'installation 1 comporte en outre :
- un boîtier 7 présentant notamment un logement 9 apte à recevoir un échangeur thermique 5,
- un capot 11, et
- un dispositif de raccordement entre les tubulures 3a, 3b reliées au circuit de fluide et l'échangeur thermique 5.

### Échangeur thermique

Selon le mode de réalisation décrit, l'échangeur thermique 5 est par exemple un radiateur de chauffage de l'habitacle d'un tel véhicule également appelé « heater core » en anglais.

Il s'agit notamment d'un échangeur thermique 5, réalisé en matériau métallique tel que de l'aluminium.

Selon le mode de réalisation l'échangeur thermique 5 présente une forme générale sensiblement parallélépipédique.

Cet échangeur thermique 5 comporte :
- un faisceau d'échange thermique 13 d'échange thermique entre deux fluides, tels que le flux d'air et un fluide tel que de l'eau glycolée, et
- au moins une boîte collectrice 15a, 15b du fluide, ici une première boîte collectrice 15a d'entrée du fluide et une deuxième boîte collectrice 15b de sortie du fluide.

Selon le mode de réalisation illustré, le faisceau d'échange thermique 13 présente une forme générale sensiblement parallélépipédique avec deux grandes faces latérales opposées, deux petites faces latérales opposées et deux faces d'extrémité opposées.

Ce faisceau d'échange thermique 13 peut comporter de façon classique un empilement de plaques ou de tubes, délimitant des canaux de circulation du fluide.

Dans cet exemple l'air traverse transversalement le faisceau d'échange thermique 13 de part et d'autre des grandes faces latérales.

Les boîtes collectrices 15a, 15b sont quant à elles agencées au niveau des faces d'extrémité opposées du faisceau d'échange thermique 13. Selon le mode de réalisation illustré ces boîtes collectrices 15a, 15b s'étendent selon une direction longitudinale *L*.

Par ailleurs, afin de permettre l'admission du fluide dans le faisceau d'échange thermique 13, les boîtes collectrices 15a, 15b présentent respectivement des extrémités de raccordement 17a, 17b communiquant respectivement avec les tubulures d'entrée et de sortie 3a, 3b.

Selon le mode de réalisation illustré sur la figure 1, ces extrémités de raccordement 17a, 17b sont agencées aux extrémités longitudinales des boîtes collectrices 15a, 15b.

Plus précisément, les extrémités de raccordement 17a, 17b sont par exemple sensiblement coudées par rapport à la direction longitudinale L de la boîte collectrice associée 15a, 15b. Les extrémités de raccordement 17a, 17b de l'échangeur thermique peuvent s'étendre selon des directions parallèles, par exemple sensiblement perpendiculaire à la direction longitudinale des boîtes collectrices 15a, 15b. Une telle configuration est appelée « side/side » en anglais. Cet agencement permet notamment de réduire l'encombrement de l'échangeur thermique 5 ainsi que le coût.

Les extrémités de raccordement 17a, 17b sont avantageusement réalisées en matière plastique. Le matériau doit être apte à résister aux hautes températures, par exemple de l'ordre de 85°C voire 130°C, auxquelles est soumis le radiateur 5. On peut citer à titre d'exemple non limitatif du polypropylène connu sous le sigle PP. Le matériau plastique peut éventuellement être renforcé en fibres de verre.

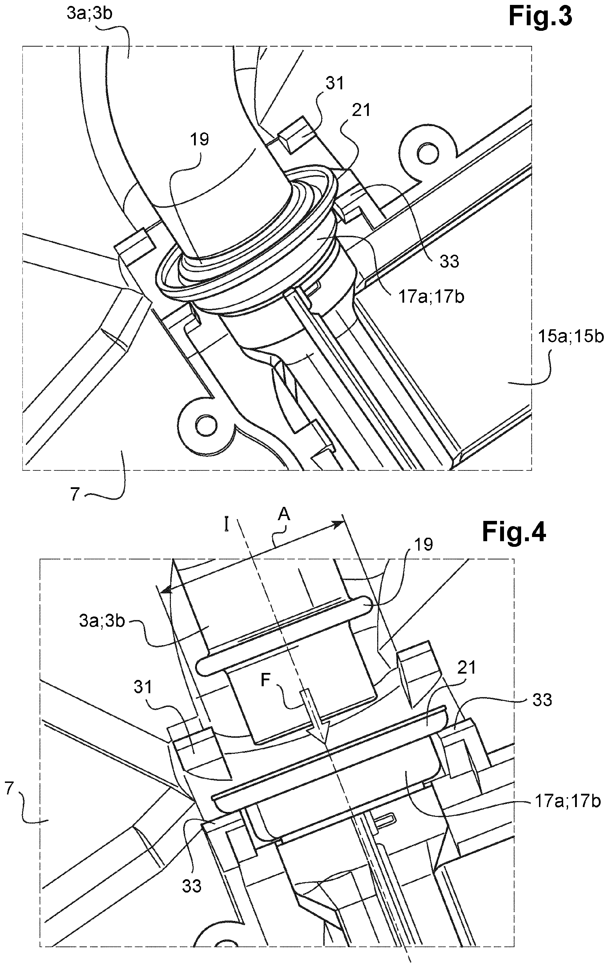

Le raccordement entre une extrémité 17a, 17b et une tubulure associée 3a, 3b est illustré sur la figure 3. Le raccordement se fait suivant un axe commun *I* entre la tubulure 3a, 3b et l'extrémité de raccordement 17a, 17b associée, comme illustré sur la figure 4, par la flèche F.

Afin de permettre ce raccordement, les extrémités de raccordement 17a, 17b présentent respectivement une forme sensiblement tubulaire complémentaire des tubulures associées 3a, 3b.

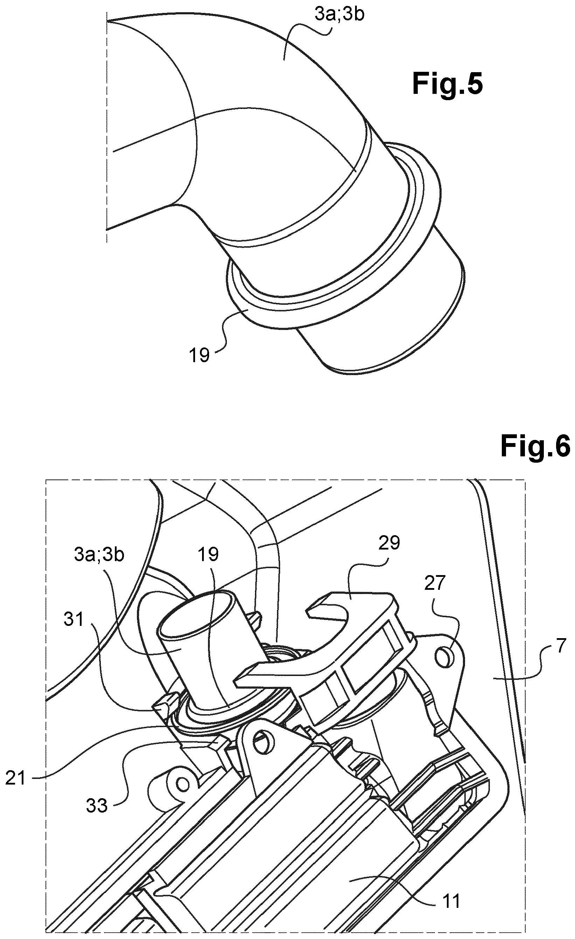

Selon le mode de réalisation illustré sur les figures 4 et 5, une tubulure 3a, 3b présente un rebord annulaire 19, et l'extrémité de raccordement 17a, 17b associée comprend une collerette 21 dans laquelle vient s'engager, au moins en partie, le rebord annulaire 19. Les régions d'extrémité des tubulures 3a, 3b sont conçues pour coopérer avec les extrémités de raccordement 17a, 17b, ici par emboîtement.

### Boîtier

En se référant de nouveau à la figure 1, le boîtier 7 reçoit donc l'échangeur thermique 5 et présente à cet effet le logement 9 et une ouverture 23 permettant l'introduction de l'échangeur thermique 5 dans le logement 9. Selon l'exemple illustré le boîtier 7 présente une ouverture 23 permettant l'introduction de l'échangeur thermique 5 par une petite face latérale du faisceau d'échange thermique 13.

De plus, le boîtier 7 peut présenter des ouvertures internes destinées à être en regard dans cet exemple des grandes faces latérales du faisceau d'échange thermique 13. Ainsi, ces grandes faces latérales de l'échangeur thermique 13 ne sont pas couvertes par le boîtier 7 pour permettre la circulation de l'air selon le mode de réalisation décrit.

### Capot

Comme précisé précédemment, l'installation 1 comporte en outre un capot 11.

Le capot 11 a notamment une fonction de fermeture de l'ouverture 23 du boîtier 7 par laquelle l'échangeur thermique 5 peut être inséré dans le boîtier 7. Afin de fermer l'ouverture 23 du boîtier 7, le capot 11 présente donc une forme complémentaire de celle de l'ouverture 23 du boîtier 7.

En variante ou en complément, le capot 11 peut avoir une fonction de protection des tubulures d'entrée et de sortie du fluide, ou encore peut faire office de conduit de diffusion d'air.

Selon le mode de réalisation illustré, le capot 11 est donc assemblé en regard d'une petite face latérale du faisceau d'échange thermique 13 en fermant l'ouverture 23 du boîtier 7, prévue pour l'insertion de l'échangeur thermique 5 dans le boîtier 7.

Le capot 11 présente dans le cas illustré une forme sensiblement longitudinale, ici sensiblement rectangulaire.

Le capot 11 est par exemple réalisé en matériau plastique. Le matériau doit être choisi de façon à résister aux hautes températures auxquelles est soumis le radiateur 5. On peut citer à titre d'exemple non limitatif du polypropylène connu sous le sigle PP.

Le capot 11 assure le maintien de l'échangeur thermique 5 dans le boîtier 7 de l'installation 1 de chauffage, de ventilation et/ou de climatisation.

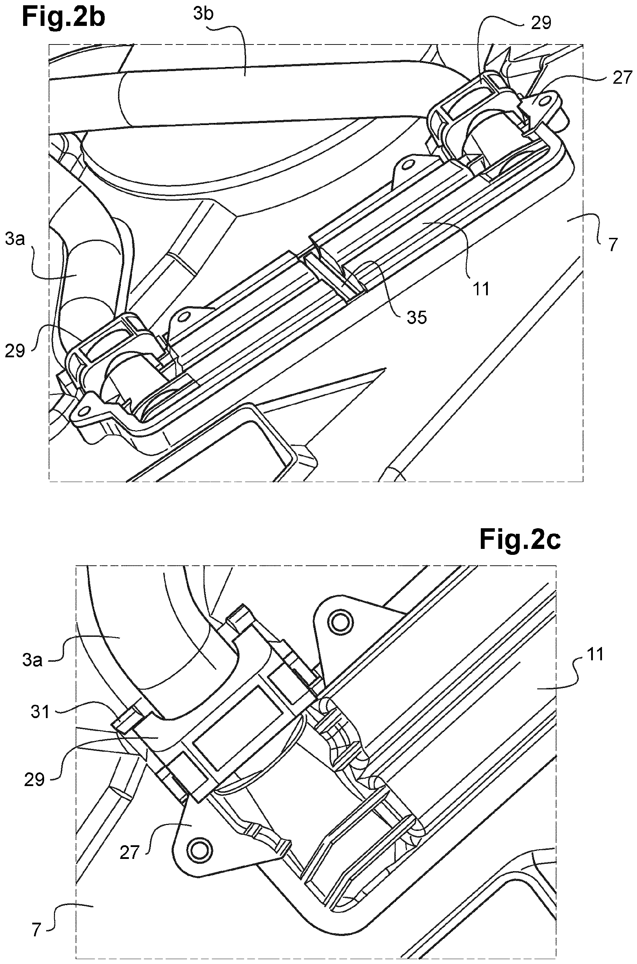

Pour cela, le capot 11 est solidarisé au boîtier 7. Le capot 11 peut présenter à cet effet des oreilles de fixation 27 sur le boîtier 7 mieux visible sur les figures 2a à 2c. À titre d'exemple, le capot 11 est vissé sur le boîtier 5 comme représenté sur les figures 2a et 2b.

### Dispositif de raccordement

Selon l'invention, le dispositif de raccordement entre une extrémité de raccordement 17a, 17b et une tubulure associée 3a, 3b comprend deux demi-brides 29, 31. Les deux demi-brides 29, 31 peuvent être intégrées d'une part au boîtier 7 et d'autre part au capot 11.

En effet, le capot 11 présente deux premières demi-brides 29 respectivement aptes à coopérer avec une deuxième demi-bride 31 complémentaire prévue sur le boîtier 7.

Les premières demi-brides 29 sont par exemple réalisées d'une seule pièce avec le capot 11.

Selon le mode de réalisation illustré, les premières demi-brides 29 sont agencées aux extrémités longitudinales du capot 11.

Chaque première demi-bride 29 est agencée au droit d'une extrémité de raccordement 17a, 17b associée. La fixation par exemple par vissage du capot 11 au boîtier 7 se fait avantageusement à proximité du dispositif de raccordement, et donc des premières demi-brides 29. Ceci participe au maintien du capot 11 contre le boîtier 7 et donc à l'assemblage entre les tubulures 3a, 3b, les extrémités de raccordement 17a, 17b associées et les demi-brides complémentaires 29, 31.

Une première demi-bride 29 est de forme complémentaire à la forme de l'extrémité de raccordement 17a, 17b associée. Selon l'exemple illustré, la première demi-bride 29 présente une forme sensiblement en « U ». Les premières et deuxièmes demi-brides 29 et 31 sont de formes complémentaires. Dans cet exemple, une deuxième demi-bride 31 présente également une forme sensiblement en « U ».

La deuxième demi-bride 31 est par exemple réalisée d'une seule pièce avec le boîtier 7. Pour ce faire, la forme du boîtier 7 est adaptée pour permettre de loger et bloquer le capot 11 et de permettre l'emmanchement de la tubulure 3a, 3b sur l'extrémité de raccordement 17a, 17b associée.

Afin de permettre le passage d'une tubulure 3a, 3b lors de l'assemblage avec l'échangeur thermique 5, la deuxième demi-bride 31 associée présente entre ses deux extrémités une côte A sensiblement plus grande que la côte maximale du diamètre de la tubulure 3a, 3b, ici de la collerette 19 de la tubulure 3a, 3b (cf figure 4).

Le boîtier 7 présente en outre une butée 33 agencée de sorte qu'une fois le capot 11 assemblé au boîtier 7, la première demi-bride 29 du capot 11 se trouve agencée entre la deuxième demi-bride 31 et la butée 33 du boîtier. La butée 33 est donc agencée en regard de la deuxième demi-bride 31 de manière à définir un logement de la première demi-bride 29 entre la deuxième demi-bride 31 et la butée 33.

La butée 33 est également réalisée d'une seule pièce avec le boîtier 7.

Selon l'exemple décrit, la butée 33 présente également une forme de bride sensiblement en « U ».

En outre, afin de s'assurer que lors de l'assemblage, les premières demi-brides 29 du capot 11 se retrouvent bien agencées en regard des deuxièmes demi-brides 31 associées et des butées 33 du boîtier, le capot 11 présente une charnière 35 visible sur les figures 2a et 2b. Cette charnière 35 offre une souplesse supplémentaire au capot 11 permettant de compenser une éventuelle dispersion géométrique de l'échangeur thermique 5.

Selon l'exemple illustré, la charnière 35 est agencée sensiblement au milieu du capot 11 dans le sens de la longueur et s'étend donc selon la direction latérale du capot 11.

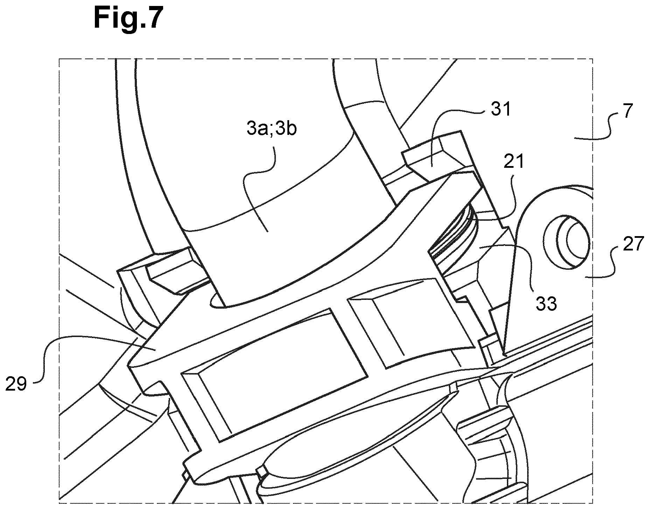

Ainsi, une fois les tubulures 3a, 3b emmanchées sur les extrémités de raccordement associées 17a, 17b (cf figures 3 et 4), le capot 11 est assemblé au boîtier 7. La première demi-bride 29 vient alors exercer un appui sur la collerette 21 de l'extrémité de raccordement 17a, 17b et sur le rebord annulaire 19 de la tubulure 3a, 3b associée. Autrement dit, la première demi-bride 29 vient coiffer latéralement la tubulure 3a, 3b et l'extrémité de raccordement 17a, 17b associée comme visible sur la figure 6 et cette première demi-bride 29 est bloquée d'une part par la deuxième demi-bride 31 et d'autre part par la butée 33 comme on le voit sur la figure 7.

Le capot 11 une fois assemblé au boîtier 7 assure ainsi en complémentarité avec le boîtier 7 le maintien des tubulures 3a, 3b assemblées aux extrémités de raccordement associées 17a, 17b ainsi que l'étanchéité.

On comprend donc que les fonctions de raccordement et d'étanchéité étant directement intégrées sur des éléments existants de l'installation 1, à savoir le boîtier 7 et le capot 11, il n'y a plus besoin de prévoir une pièce supplémentaire ni d'outillage spécifique.

L'assemblage du capot 11 au boîtier 7 se fait de façon simple et rapide.

Ceci permet donc de réduire l'effort d'assemblage, le nombre de pièces et en conséquence le coût, tout en garantissant l'étanchéité.

## Revendications

1. Installation (1) pour véhicule automobile comprenant :
- un échangeur thermique (5),
- un boîtier (7) de réception de l'échangeur thermique (5), présentant au moins une ouverture (23) pour l'insertion de l'échangeur thermique (5),
- un capot (11) agencé en regard de l'ouverture (23) du boîtier (7),
- au moins deux tubulures (3a, 3b) d'entrée et de sortie d'un fluide destinées à être raccordées à un circuit du fluide, et
- un dispositif de raccordement (29, 31) des tubulures (3a, 3b) d'entrée et de sortie du fluide à l'échangeur thermique (5),
**caractérisée en ce que** le dispositif de raccordement (29, 31) est réalisé d'une part par le capot (11) et d'autre part par le boîtier (7).

2. Installation (1) selon la revendication 1, selon laquelle le dispositif de raccordement (29, 31) comprend au moins une première demi-bride (29) et au moins une deuxième demi-bride (31) de forme complémentaire à la forme de la première demi-bride (29).

3. Installation (1) selon la revendication 2, dans laquelle la première demi-bride (29) est réalisée d'une seule pièce avec le capot (11).

4. Installation (1) selon l'une des revendications 2 ou 3, dans laquelle la deuxième demi-bride (31) est réalisée d'une seule pièce avec le boîtier (7).

5. Installation (1) selon l'une des revendications 2 à 4, dans laquelle le boîtier (7) comporte au moins une butée (33) agencée en regard d'une deuxième demi-bride (31) de sorte que la première demi-bride (29) soit intercalée entre une deuxième demi-bride (31) et une butée (33).

6. Installation (1) selon la revendication 5, dans laquelle la butée (33) est réalisée d'une seule pièce avec le boîtier (7).

7. Installation (1) selon l'une des revendications 5 ou 6, dans laquelle la butée (33) présente une forme de bride sensiblement en « U ».

8. Installation (1) selon l'une quelconque des revendications précédentes, dans laquelle l'échangeur thermique (5) comprend au moins une boîte collectrice (15a, 15b) du fluide présentant une extrémité de raccordement (17a, 17b) configurée pour être raccordée à une tubulure associée (3a, 3b).

9. Installation (1) selon la revendication 8, dans laquelle au moins une tubulure (3a, 3b) présente un rebord annulaire (19) et dans laquelle une extrémité de raccordement (17a, 17b) associée présente une collerette (21) dans laquelle vient s'engager, au moins en partie, le rebord annulaire (19) de la tubulure associée (3a, 3b).

10. Installation (1) selon l'une des revendications 8 ou 9, dans laquelle l'extrémité de raccordement (17a, 17b) est sensiblement coudée par rapport à la boîte collectrice (15a, 15b).

11. Installation (1) selon l'une des revendications 8 à 10, dans laquelle l'échangeur thermique (5) comprend deux boîtes collectrices (15a, 15b) du fluide présentant respectivement une extrémité de raccordement (17a, 17b) sensiblement coudée par rapport à la boîte collectrice (15a, 15b) associée.

12. Installation selon l'une quelconque des revendications précédentes, dans laquelle le capot (11) présente une forme sensiblement longitudinale et comporte une charnière (35) s'étendant sensiblement dans le sens de la largeur du capot (11).

## Patentansprüche

1. Anlage (1) für ein Kraftfahrzeug, die enthält:
- einen Wärmetauscher (5),
- ein Gehäuse (7) zur Aufnahme des Wärmetauschers (5), das mindestens eine Öffnung (23) zum Einführen des Wärmetauschers (5) aufweist,
- eine Abdeckung (11), die gegenüber der Öffnung (23) des Gehäuses (7) angeordnet ist,
- mindestens zwei Rohrstutzen (3a, 3b) für den Eingang und Ausgang eines Fluids, die dazu bestimmt sind, an einen Kreislauf des Fluids angeschlossen zu werden, und
- eine Anschlussvorrichtung (29, 31) der Rohrstutzen (3a, 3b) für den Eingang und Ausgang des Fluids an den Wärmetauscher (5),
**dadurch gekennzeichnet, dass** die Anschlussvorrichtung (29, 31) einerseits durch die Abdeckung (11) und andererseits durch das Gehäuse (7) hergestellt wird.

2. Anlage (1) nach Anspruch 1, wobei die Anschlussvorrichtung (29, 31) mindestens einen ersten Halbflansch (29) und mindestens einen zweiten Halbflansch (31) einer zur Form des ersten Halbflanschs (29) komplementären Form enthält.

3. Anlage (1) nach Anspruch 2, wobei der erste Halbflansch (29) aus einem Stück mit der Abdeckung (11) hergestellt ist.

4. Anlage (1) nach einem der Ansprüche 2 oder 3, wobei der zweite Halbflansch (31) aus einem Stück mit dem Gehäuse (7) hergestellt ist.

5. Anlage (1) nach einem der Ansprüche 2 bis 4, wobei das Gehäuse (7) mindestens einen Anschlag (33) aufweist, der gegenüber einem zweiten Halbflansch (31) derart angeordnet ist, dass der erste Halbflansch (29) zwischen einen zweiten Halbflansch (31) und einen Anschlag (33) eingefügt ist.

6. Anlage (1) nach Anspruch 5, wobei der Anschlag (33) aus einem Stück mit dem Gehäuse (7) hergestellt ist.

7. Anlage (1) nach einem der Ansprüche 5 oder 6, wobei der Anschlag (33) eine im Wesentlichen "U"-förmige Flanschform hat.

8. Anlage (1) nach einem der vorhergehenden Ansprüche, wobei der Wärmetauscher (5) mindestens einen Sammelbehälter (15a, 15b) des Fluids enthält, der ein Anschlussende (17a, 17b) aufweist, das konfiguriert ist, an einen zugeordneten Rohrstutzen (3a, 3b) angeschlossen zu werden.

9. Anlage (1) nach Anspruch 8, wobei mindestens ein Rohrstutzen (3a, 3b) eine ringförmige Randleiste (19) aufweist, und wobei ein zugeordnetes Anschlussende (17a, 17b) einen Kragen (21) aufweist, in den sich die ringförmige Randleiste (19) des zugeordneten Rohrstutzens (3a, 3b) zumindest zum Teil einfügt.

10. Anlage (1) nach einem der Ansprüche 8 oder 9, wobei das Anschlussende (17a, 17b) bezüglich des Sammelbehälters (15a, 15b) im Wesentlichen umgebogen ist.

11. Anlage (1) nach einem der Ansprüche 8 bis 10, wobei der Wärmetauscher (5) zwei Sammelbehälter (15a, 15b) des Fluids enthält, die je ein im Wesentlichen bezüglich des zugeordneten Sammelbehälters (15a, 15b) umgebogenes Anschlussende (17a, 17b) aufweisen.

12. Anlage nach einem der vorhergehenden Ansprüche, wobei die Abdeckung (11) eine im Wesentlichen längliche Form hat und ein Scharnier (35) aufweist, das sich im Wesentlichen in Richtung der Breite der Abdeckung (11) erstreckt.

## Claims

1. Installation (1) for a motor vehicle, comprising:
- a heat exchanger (5),
- a casing (7) for receiving the heat exchanger (5), having at least one opening (23) for inserting the heat exchanger (5),
- a cover (11) arranged facing the opening (23) in the casing (7),
- at least two inlet and outlet tubes (3a, 3b) for a fluid, intended to be connected to a fluid circuit, and
- a connection device (29, 31) for connecting the fluid inlet and outlet tubes (3a, 3b) to the heat exchanger (5),
**characterized in that** the connection device (29, 31) is formed by the cover (11) and by the casing (7) .

2. Installation (1) according to Claim 1, wherein the connection device (29, 31) includes at least one first half-clamp (29) and at least one second half-clamp (31) of complementary shape to the first half-clamp (29) .

3. Installation (1) according to Claim 2, wherein the first half-clamp (29) is made in one piece with the cover (11).

4. Installation (1) according to either of Claims 2 and 3, wherein the second half-clamp (31) is made in one piece with the casing (7).

5. Installation (1) according to one of Claims 2 to 4, wherein the casing (7) includes at least one abutment (33) arranged facing a second half-clamp (31) so that the first half-clamp (29) is between a second half-clamp (31) and an abutment (33).

6. Installation (1) according to Claim 5, wherein the abutment (33) is made in one piece with the casing (7).

7. Installation (1) according to either one of Claims 5 and 6, wherein the abutment (33) takes the form of a substantially "U" shaped flange.

8. Installation (1) according to any one of the preceding claims, wherein the heat exchanger (5) includes at least one fluid manifold (15a, 15b) having a connecting end (17a, 17b) configured to be connected to an associated tube (3a, 3b).

9. Installation (1) according to Claim 8, wherein at least one tube (3a, 3b) has an annular rim (19) and wherein an associated connecting end (17a, 17b) includes a flange (21) in which the annular rim (19) of the associated tube (3a, 3b) is at least partially engaged.

10. Installation (1) according to either one of Claims 8 and 9, wherein the connecting end (17a, 17b) is substantially cranked relative to the manifold (15a, 15b).

11. Installation (1) according to one of Claims 8 to 10, wherein the heat exchanger (5) includes two fluid manifolds (15a, 15b) having respective connecting ends (17a, 17b) substantially cranked relative to the associated manifold (15a, 15b).

12. Installation according to any one of the preceding claims, wherein the cover (11) has a substantially elongate shape and includes a hinge (35) extending substantially in the direction of the width of the cover (11) .
